(19) Europäisches Patentamt
European Patent Office
Office européen des brevets

(11) Publication number : **0 294 862 B1**

(12) # EUROPEAN PATENT SPECIFICATION

(45) Date of publication of patent specification : **15.01.92 Bulletin 92/03**

(51) Int. Cl.$^5$ : **C08K 3/06,** C08L 69/00, C08L 67/02

(21) Application number : **88200911.1**

(22) Date of filing : **09.05.88**

(54) **Polymer mixture having an aromatic polycarbonate and an aromatic polyester.**

(30) Priority : **12.06.87 NL 8701367**

(43) Date of publication of application : **14.12.88 Bulletin 88/50**

(45) Publication of the grant of the patent : **15.01.92 Bulletin 92/03**

(84) Designated Contracting States : **DE FR GB IT NL**

(56) References cited :
**FR-A- 2 279 816**
**US-A- 3 591 550**
**US-A- 4 088 709**
**US-A- 4 555 540**
**US-A- 4 560 722**

(73) Proprietor : **GENERAL ELECTRIC COMPANY**
**1 River Road**
**Schenectady, N.Y. 12151 (US)**

(72) Inventor : **Verhoeven, Jeroen Johannes**
**General Electric Plastics B.V. P.O. Box 117**
**NL-4600 AC Bergen (NL)**
Inventor : **Roovers, Wilhelmus Marinus Maria**
**General Electric Plastics B.V. P.O. Box 117**
**NL-4600 AC Bergen op Zoom (NL)**

(74) Representative : **Schüler, Horst, Dr. et al**
**General Electric Praunheimer Landstrasse 50**
**W-6000 Frankfurt 90 (DE)**



Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a polymer mixture which comprises the following constituents :

A. 1-98.99% by weight of an aromatic polycarbonate,

B. 98.99-1% by weight of an aromatic polyester, and

C. 0.01-2% by weight of a stabilizer.

It is known, for example, from GB-A-1466154, that polymer mixtures which comprise an aromatic polycarbonate and an aromatic polyester show a certain instability.

A transesterification reaction probably occurs in such mixtures.

It is proposed in GB-A-1466154 to suppress the said transesterification by the addition of a phosphorus-containing compound, for example, triphenyl phosphite, phosphorous acid.

The invention is based on the discovery that a further improvement of the stability can be obtained.

The polymer mixture according to the invention is characterised in that as a stabilizer it comprises a phosphorus containing stabilizer known per se and elementary sulphur, in a quantity from 0.0001-1% by weight calculated with respect to the sum of the parts by weight of A + B + C.

The use of elementary sulphur and a phosphorus-containing stabilizer known per se results in a slightly improved stability compared with polymer mixtures which comprise only a phosphorus-containing stabilizer.

The known phosphorus-containing stabilizers have the additional disadvantage of showing only a slight stabilizing activity in polymer mixtures which comprise one or more pigments, for example, ultramarine blue and titanium dioxide. It has been found quite unexpectedly that the addition of a small quantity of elementary sulphur removes this disadvantage.

The invention also relates to articles formed from the polymer mixture according to the invention.

The polymer mixture according to the invention comprises at any rate the following constituents in the quantities indicated hereinbefore :

A. aromatic polycarbonate,

B. aromatic polyester,

C. a phosphorus-containing stabilizer and elementary sulphur.

The polymer mixture according to the invention may moreover comprise one or more of the following constituents :

D. one or more pigments

E. conventional additives.

### A. Aromatic polycarbonate

Aromatic polycarbonates are materials known per se. They are generally prepared by reacting a dihydric phenol compound with a carbonate precursor, for example, phosgene, a halogen formiate or a carbonate ester. Aromatic polycarbonates are polymers which comprise units of the formula

$$\left[ O - A - O - \overset{\overset{O}{\|}}{C} \right]$$

wherein A is a bivalent aromatic radical derived from the dihydric phenol which is used in the preparation of the polymer. As dihydric phenols may be used in the preparation of the aromatic polycarbonates mononuclear or polynuclear aromatic compounds which comprise two hydroxy radicals which are directly bonded to a carbon atom of an aromatic nucleus.

Examples of suitable dihydric phenols are :

2,2-bis-(4-hydroxyphenyl)propane ; hydroquinone ; resorcinol ; 2,2-bis-(4-hydroxyphenyl)pentane ; 2,4′-(dihydroxydiphenyl)methane ; bis(2-hydroxyphenyl)methane ; bis-(4-hydroxyphenyl)methane ; bis-(4-hydroxy-5--nitrophenyl)methane ; 1,1-bis-(4-hydroxyphenyl)ethane ; 3,3-bis(4-hydroxyphenyl)pentane ; 2,2-dihydroxyphenyl ; 2,6-dihydroxynaphthalene ; bis-(4-hydroxydiphenyl)sulphone ; bis-(3,5-diethyl-4-hydroxyphenyl)sulphone ; 2,2-bis-(3,5-dimethyl-4-hydroxyphenyl)propane ; 2,4′-di-hydroxyphenyl sulphone ; (5′-chloro-2,4′-dihydroxy-diphenyl)sulphone ; bis-(4-hydroxyphenyl)diphenyl sulphone ; 4,4′-dihydroxydiphenyl ether ; 4,4′-dihydroxy-3,3-dichlorodiphenyl ether ; 4,4′-dihydroxy-2,5-dihydroxydiphenyl ether.

Other likewise suitable dihydric phenols are disclosed in US-A-2,999,835 ; 3,038,365 ; 3,334,154, and 4,131,575.

The aromatic polycarbonates may be prepared according to methods known per se : for example, by reacting a dihydric phenol with a carbonate precursor, for example, phosgene. For this purpose, reference may be made to the United States Patent Specifications mentioned hereinbefore and to US-A-4,018,750 and 4,123,426. They may also be prepared by a transesterification as described in US-A-3,153,008.

The branched polycarbonates known per se as described, for example, in US-A-4,001,184 are also suitable.

Suitable aromatic polycarbonates are also the so-called polyester carbonates which are obtained by carrying out the polymerisation reaction in the presence of an ester precursor, for example, a difunctional carboxylic acid, for example, terephthalic acid or an ester-forming derivative thereof. These polyester carbonates have ester compounds and carbonate compounds in the polymeric chain. Polyester carbonates are described, for example, in US-A-3,169,121.

It is also possible to use a mixture of aromatic polycarbonates.

## B. Aromatic polyester

Any aromatic polyester known per se may be used in the polymer mixtures according to the invention. The polyalkylene terephthalates are particularly suitable polyesters.

Polyalkylene terephthalates are compounds known per se. They may be described as glycol esters of terephthalic acid. They may be prepared, for example, by alcoholysis of esters of terephthalic acid with a glycol succeeded by a polymerisation reaction, by heating glycol compounds with free acids or derivatives thereof. The glycol part of the polyalkylene terephthalates may comprise from 2 to 10 carbon atoms ; it preferably comprises from 2 to 4 carbon atoms, in the form of linear alkylene chains.

Polyesters derived from ethylene glycol or butane-1,4-diol and terephthalic acid are preferably used. It is also possible to use copolyesters in which a part of the said glycol and/or of the terephthalic acid is replaced by another glycol and/or aromatic carboxylic acid. Generally, not more than 30 mol.%, preferably not more than 10 mol.%, of the glycol and/or terephthalic acid are replaced by other comonomers in such copolyesters.

It is also possible to use so-called block copolyesters as a polyalkylene terephthalate. The said block copolyesters are prepared, for example, by converting a polybutylene terephthalate with reactive terminal groups with a reactive polyester or copolyester in the presence of a transesterification catalyst.

It is further possible to incorporate a branching agent in the polyalkylene terephthalate, for example, a glycol having three or more hydroxyl groups or a trifunctional or multifunctional carboxylic acid.

It is also possible to use a mixture of various polyesters.

## C. Stabilizer

The polymer mixture according to the invention comprises as a stabilizer one or more phosporus-containing compounds and elementary sulphur known per se for this purpose. For the known phosphorus-containing stabilizers may be referred, for example, to GB-A-1466154 and GB-A-1569296. All phosphorus containing compounds mentioned in these patent papers may be used in the polymer mixtures according to the invention, for example, phosphites and phosphates.

The polymer mixtures according to the invention comprise as a stabilizer in addition 0.0001-1% by weight of elementary sulphur, calculated with respect to the sum of the parts by weight of A + B + C.

## D. Pigments

The stabilizers as used in the polymer mixtures according to the invention have the advantage of not losing or hardly losing their activity in the presence of pigments.

Therefore, the polymer mixtures according to the invention may comprise one or more pigments, for example, ultramarine blue and titanium dioxide.

## E. Conventional additives

The polymer mixture according to the invention may comprise as additives, for example, polyolefins, mould-release agents, agents to improve the flame retarding properties, further stabilizers, for example, thermal stabilizers, dyes, fillers and reinforcing fillers, for example, glass fibres.

More in particular, the polymer mixture according to the invention may also comprise a combination of various of the additives mentioned hereinbefore.

The polymer mixture according to the invention preferably comprises a weight ratio of the quantity of aromatic polycarbonate (A) to aromatic polyester (B) between 1 : 8 and 8 : 1.

The polymer mixture according to the invention can be obtained according to conventional methods of preparing polymer mixtures, for example, by melt extrusion. The elementary sulphur may be added, for example, by first pre-mixing it in the dry state with one or more of the remaining constituents.

The invention will now be described in greater detail with reference to the ensuing specific examples :

Comparative examples A, B, C and D, examples I, II, III and IV.

Seven polymer mixtures were prepared having a composition as indicated in Table I hereinafter. The constituents used were the following :

| | |
|---|---|
| PBT : | Polybutylene terephthalate having an intrinsic viscosity of 1.10 dl/g measured in a 60/40 mixture of phenol and 1,1,2,2,-tetrachloroethane at 25°C. |
| PC : | Polycarbonate derived from bisphenol A and phosgene, having an intrinsic viscosity of 53.0 ml/g, measured in methylene chloride ($CH_2Cl_2$) at 25°C. |
| FOS : | Phosphite, namely a mixture of various aromatic and aliphatic phosphites. |
| S : | Elementary sulphur. |
| Pigment : | Ultramarine blue : pigment 29 |
| $TiO_2$ : | Titanium dioxide. |

The indicated constituents were extruded collectively on a double-blade extruder at a melting temperature of approximately 280°C and a speed of 200 rpm.

The stability against transesterification was determined as follows. Test pieces for determining the Vicat-B value according to DIN 53460 were injection-moulded from the polymer mixtures according to all the examples. The test pieces were injection-moulded under extra heavy conditions (285°C, 6 minutes). In a transesterification reaction, products are formed which lead to a reduction of the Vicat value. A lower Vicat value thus indicates a transesterification : the higher the Vicat, the stabler is the polymer mixture.

The resulting test pieces were also evaluated visually with regard to surface defects (so-called "splay"). Such surface defects often occur as a result of transesterification reactions.

The results found are recorded in Table I.

TABLE I

| Example | A | B | C | D | I | II | III |
|---|---|---|---|---|---|---|---|
| Composition (parts by weight) | | | | | | | |
| o PBT | 45 | 43 | 45 | 43 | 45 | 45 | 43 |
| o PC | 55 | 53 | 55 | 55 | 55 | 55 | 53 |
| o FOS | - | - | 0.2 | 0.2 | 0.2 | 0.2 | 0.2 |
| o S | - | - | - | - | 0.0035 | 0.0175 | 0.0035 |
| o Pigment | - | 3.5 | - | 3.5 | - | - | 3.5 |
| o $TiO_2$ | - | 0.5 | - | 0.5 | - | - | 0.5 |
| Properties | | | | | | | |
| o Vicat B (°C) | 80 | 80 | 124 | 97 | 127 | 127 | 116 |
| o Splay* | + | + | - | + | - | - | - |

* - no or slight splay; + strong splay

It may be seen from the results of Table I that the polymer mixtures according to the invention (examples I, II, and III) generally have an equal to slightly better stability than the comparative polymer mixtures A, B, C and D.

It is striking in particular that the polymer mixture according to Example D has a much worse stability than the corresponding example III according to the invention. The known phosphite stabilizer obviously loses its activity in the presence of pigments. The stabilizer according to the invention does not exhibit this disadvantage.

## Claims

1. A polymer mixture which comprises the following constituents :

A. 1-98.99% by weight of an aromatic polycarbonate,

B. 98.99-1% by weight of an aromatic polyester, and

C. 0.01-2% by weight of a stabilizer,

characterised in that the polymer mixture comprises as a stabilizer a phosphorus-containing stabilizer known per se and elementary sulphur, in a quantity of 0.0001-1% by weight calculated with respect to the sum of the parts by weight of A + B + C.

2. A polymer mixture as claimed in Claim 1, characterised in that the polymer mixture moreover comprises a pigment.

3. A polymer mixture as claimed in Claim 2, characterised in that the polymer mixture comprises ultramarine blue as a pigment.

4. A polymer mixture as claimed in Claim 1, characterised in that the polymer mixture comprises in addition

one or more conventional additives other than pigments.

5. Articles formed from the polymer mixture as claimed in Claim 1.

## Patentansprüche

1. Polymermischung, welche die folgenden Bestandteile enthält :

A. 1-98,99 Gew.-% eines aromatischen Polykarbonats,

B. 98,99 bis 1 Gew.-% eines aromatischen Polyesters und

C. 0,01 bis 2 Gew.-% eines Stabilisators,

dadurch gekennzeichnet, daß die Polymermischung als Stabilisator einen an sich bekannten phosphorhaltigen Stabilisator und elementaren Schwefel in einer Menge von 0,0001 bis 1 Gew.-% berechnet mit Bezug auf die Summe der Gewichtsteile A + B + C enthält.

2. Polymermischung nach Anspruch 1, dadurch gekennzeichnet, daß die Polymermischung weiterhin ein Pigment enthält.

3. Polymermischung nach Anspruch 2, dadurch gekennzeichnet, daß die Polymermischung Ultramarinblau als Pigment enthält.

4. Polymermischung nach Anspruch 1, dadurch gekennzeichnet, daß die Polymermischung zusätzlich ein oder mehrere herkömmliche Additive, die von Pigmenten verschieden sind, enthält.

5. Gegenstände, die aus der Polymermischung nach Anspruch 1 ausgeformt sind.

## Revendications

1. Mélange de polymères qui comprend les constituants suivants :

A. 1 à 98,99% en poids d'un polycarbonate aromatique,

B. 98,99 à 1% en poids d'un polyester aromatique et

C. 0,01 à 2% en poids d'un stabilisant,

le mélange de polymères étant caractérisé en ce qu'il comprend comme stabilisant un stabilisant phosphoré connu en soi et du soufre élémentaire, en une proportion de 0,0001 à 1% en poids, calculée relativement à la somme des parties en poids de A + B + C.

2. Mélange de polymères selon la revendication 1, caractérisé en ce qu'il comprend de plus un pigment.

3. Mélange de polymères selon la revendication 2, caractérisé en ce qu'il comprend du bleu d'outremer comme pigment.

4. Mélange de polymères selon la revendication 1, caractérisé en ce qu'il comprend de plus un ou plusieurs additifs classiques autres que des pigments.

5. Articles formés d'un mélange de polymères selon la revendication 1.